# FASCICULE DE BREVET EUROPEEN

(11) **EP 2 212 538 B1**
(45) Date de publication et mention de la délivrance du brevet: **31.05.2017**
(21) Numéro de dépôt: 08871241.9
(22) Date de dépôt: 30.10.2008
(51) Int. Cl.: F02K 3/06

(54) **PROCÉDÉ POUR AMÉLIORER LES PERFORMANCES D'UN TURBOMOTEUR À DOUBLE FLUX**
VERFAHREN ZUR VERBESSERUNG DER LEISTUNG EINER UMLEITUNGSGASTURBINE
METHOD FOR IMPROVING THE PERFORMANCE OF A BYPASS TURBOJET ENGINE

(30) Priorité: 06.11.2007 FR 0707783
(43) Date de publication de la demande: 04.08.2010
(73) Titulaire: Airbus Opérations SAS, 31060 Toulouse (FR)
(72) Inventeur: PRAT, Damien, 31770 Colomiers (FR); CROSTA, Frank, 31490 Leguevin (FR)
(74) Mandataire: Gevers & Orès
(86) Numéro de dépôt international: PCT/FR2008/001529
(87) Numéro de publication internationale: WO 2009/092893

(56) Documents cités:
- EP-A- 1 619 376
- US-A- 4 242 864
- US-A- 5 211 007
- US-A1- 2004 031 258

## Description

La présente invention concerne des perfectionnements aux turbomoteurs à double flux pour aéronefs, lesdits perfectionnements permettant d'augmenter les performances desdits turbomoteurs et d'en réduire le bruit en vol de croisière.

Plus particulièrement, l'invention concerne les turbomoteurs à double flux, par exemple décrits dans le document WO 2006/123035, du type comportant, autour d'un axe longitudinal :
- une nacelle pourvue d'un capot externe de nacelle et enfermant une soufflante engendrant le flux froid et un générateur central engendrant le flux chaud ;
- un canal annulaire de flux froid ménagé autour dudit générateur central de flux chaud ;
- un capot externe de soufflante délimitant ledit canal annulaire de flux froid du côté dudit capot externe de nacelle ;
- un orifice annulaire de sortie du flux froid, dont le bord, qui forme le bord de fuite de ladite nacelle, est déterminé par ledit capot externe de nacelle et par ledit capot externe de soufflante convergeant l'un vers l'autre jusqu'à se rejoindre ;
- un capot interne de soufflante délimitant ledit canal annulaire de flux froid du côté dudit générateur central de flux chaud, traversant ledit orifice de sortie du flux froid et formant une saillie vers l'arrière dudit turbomoteur hors dudit orifice de sortie du flux froid ; et
- un col de tuyère de flux froid qui est ménagé, en avant dudit orifice de sortie du flux froid, entre ledit capot interne de soufflante et ledit capot externe de soufflante et dont la section annulaire présente une aire nominale fixée par le cycle thermodynamique du turbomoteur et inférieure à l'aire dudit orifice de sortie du flux froid, de sorte qu'une tuyère convergente/divergente est formée à la partie arrière dudit canal de flux froid.

Lorsqu'un aéronef portant un tel turbomoteur est en vol, notamment en vol de croisière, il est connu que, par suite de la différence des pressions audit orifice de sortie du flux froid entre ledit flux froid et l'écoulement aérodynamique externe autour de ladite nacelle, il apparaît, dans ledit flux froid, en arrière dudit col de tuyère, une alternance de zones de survitesses supersoniques et de zones de vitesses subsoniques, les transitions entre les zones de survitesses supersoniques et les zones de vitesses subsoniques étant brutales, non progressives et sans valeurs de vitesse intermédiaires et résultant de chocs droits. Il en résulte que ledit flux froid est le siège d'ondes de choc qui se propagent à l'arrière dudit turbomoteur et qui non seulement engendrent un bruit important (dit "bruit de cellules de choc"), mais encore dégradent les performances du turbomoteur et donc celles de l'aéronef qui le porte.

La présente invention a pour objet de remédier à ces inconvénients, en prenant en compte le fait que, généralement, les aéronefs, et notamment les avions de transport civil, sont prévus pour accomplir, de façon répétitive, des missions de vol semblables.

A cette fin, selon l'invention, le procédé pour améliorer les performances d'un turbomoteur à double flux, du type rappelé ci-dessus et monté sur un aéronef devant accomplir une mission de vol déterminée comprenant une phase de vol de croisière, est remarquable en ce que :
- on détermine les valeurs extrêmes du taux de détente dudit flux froid correspondant respectivement au début et à la fin de ladite phase de croisière ;
- on choisit, entre lesdites valeurs extrêmes, une valeur de référence pour ledit taux de détente ;
- pour cette valeur de référence du taux de détente, on détermine la valeur théorique de l'aire dudit orifice de sortie du flux froid à partir d'une valeur théorique auxiliaire représentative du rapport entre ladite aire théorique de l'orifice de sortie du flux froid et ladite aire nominale de la section dudit col de tuyère ; et
- on dispose ledit orifice de sortie du flux froid le long dudit axe longitudinal de façon que son aire corresponde à ladite valeur théorique.

Ainsi, grâce à la présente invention, on adapte au moins sensiblement la tuyère dudit turbomoteur aux conditions du vol de croisière de ladite mission, la pression du flux froid, à l'orifice de sortie de celui-ci, pouvant alors être proche, sinon égale, à la pression de l'écoulement aérodynamique externe autour de la nacelle. Il en résulte la disparition, dans ledit flux froid, des zones de survitesses et des chocs, ce qui améliore les performances du turbomoteur et en réduit les bruits.

Ladite valeur théorique auxiliaire peut être prélevée sur des tables à la disposition des aérodynamiciens et généralement appelées « tables de détente ou compression isentropiques - tables de chocs » (« Expanded Mach Number Chart » en langue anglaise).

En effet, on sait qu'il existe, d'une part, une première bijection entre le taux de détente (qui est le rapport Pt/P entre la pression totale Pt et la pression statique P - ici la pression ambiante) et le nombre de Mach détendu M et, d'autre part, une seconde bijection entre ce nombre de Mach détendu M et le rapport entre l'aire de la section d'un tube de courant isentropique (c'est-à-dire l'aire théorique Ath de l'orifice de sortie) et l'aire de la section où le nombre de Mach est égal à 1 (c'est-à-dire l'aire Ac du col de tuyère).

Ainsi, pour la valeur de référence du taux de détente, lesdites tables mentionnées ci-dessus donnent d'abord le nombre de Mach détendu M, puis le rapport Ath/Ac. Puisque l'aire Ac du col de tuyère est nominale et connue, il est aisé d'en déduire l'aire Ath que doit avoir l'orifice de sortie du flux froid pour adapter la tuyère du flux froid au vol de croisière.

On remarquera que le document US 2004/0031258 A1 décrit un turbomoteur à double flux dans lequel le bruit est supprimé par un directeur de jet disposé dans le flux froid, au voisinage de la sortie de la tuyère, pour dévier ledit flux froid du flux chaud.

Par ailleurs, le document EP-A-1 619 376 décrit une tuyère à géométrie variable par coulissement, tandis que le document US 5 211 007 décrit un procédé de commande d'un turbomoteur faisant varier la section de sortie de la tuyère et/ou mélangeant le flux froid au gaz d'échappement à l'entrée de la tuyère.

Dans le procédé conforme à la présente invention, lesdites valeurs du taux de détente dudit flux froid sont déterminées par le calcul, à partir de paramètres tels que le type de l'aéronef, sa masse, les performances désirées, la poussée demandée, le profil d'altitude du vol, etc...

Il est alors aisé de déterminer la valeur de référence du taux de détente comme étant au moins approximativement égale à la valeur moyenne entre lesdites valeurs extrêmes du taux de détente dudit flux froid correspondant respectivement au début et à la fin de ladite phase de croisière.

Dans le cas où ledit capot interne de soufflante présente la forme au moins approximative d'un tonneau, il est avantageux que ledit col de tuyère de flux froid soit disposé en arrière du maître-couple dudit capot interne de soufflante. Ainsi, ledit col de tuyère de flux froid peut être orienté de façon que ledit flux froid soit aligné sur le cône moyen de ladite tuyère.

Par ailleurs, afin de faciliter la mise ne oeuvre de la présente invention, il est avantageux que, au moins au voisinage dudit orifice annulaire de sortie du flux froid, l'angle de convergence entre ledit capot externe de ______ nacelle et ledit capot externe de soufflante soit égal à quelques degrés, par exemple de l'ordre de 5 degrés.

Les figures du dessin annexé feront bien comprendre comment l'invention peut être réalisée. Sur ces figures, des références identiques désignent des éléments semblables.
La figure 1 représente, en coupe axiale schématique, un turbomoteur conforme à la présente invention.
La figure 2 montre de façon schématique et partielle, et à plus grande échelle, la tuyère de flux froid du turbomoteur de la figure 1.
La figure 3 reproduit une partie des "tables de détente ou compression isentropiques - tables de chocs" à la disposition des aérodynamiciens.

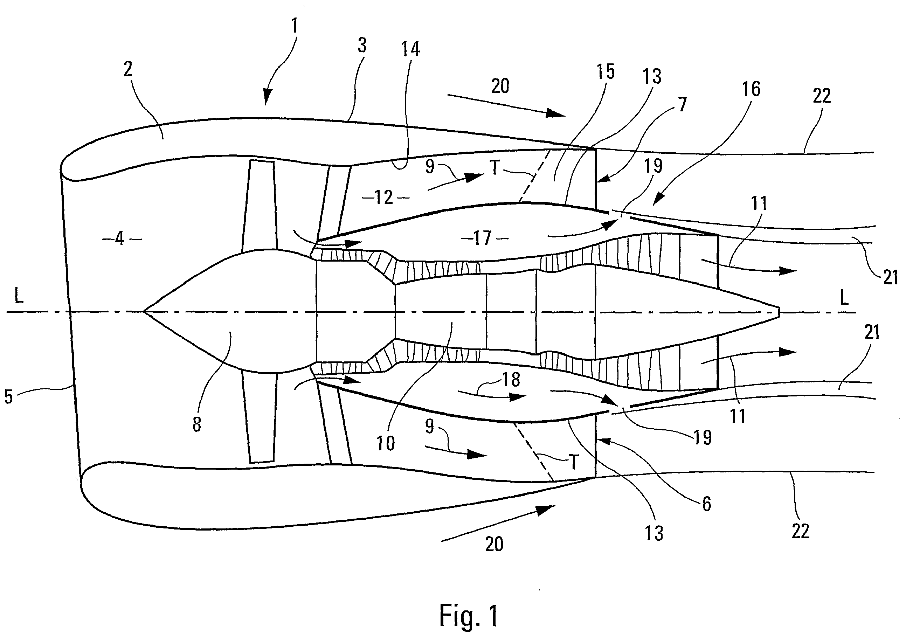

Le turbomoteur à double flux 1, d'axe longitudinal L-L et montré sur la figure 1, comporte une nacelle 2 délimitée extérieurement par un capot externe de nacelle 3.

La nacelle 2 comporte, à l'avant, une entrée d'air 4 pourvue d'un bord d'attaque 5 et, à l'arrière, un orifice de sortie d'air 6 délimité par un bord de fuite 7.

A l'intérieur de ladite nacelle 2, sont disposés :
- une soufflante 8 dirigée vers l'entrée d'air 4 et apte à engendrer le flux froid 9 dudit turbomoteur 1 ;
- un générateur central 10, comprenant de façon connue des compresseurs à basse et haute pression, une chambre de combustion et des turbines à basse et haute pression, et engendrant le flux chaud 11 dudit turbomoteur 1 ; et
- un canal annulaire de flux froid 12, ménagé autour dudit générateur central 10, entre un capot interne de soufflante 13 disposé du côté du générateur central 10 et un capot externe de soufflante 14 disposé du côté du capot externe de nacelle 3.

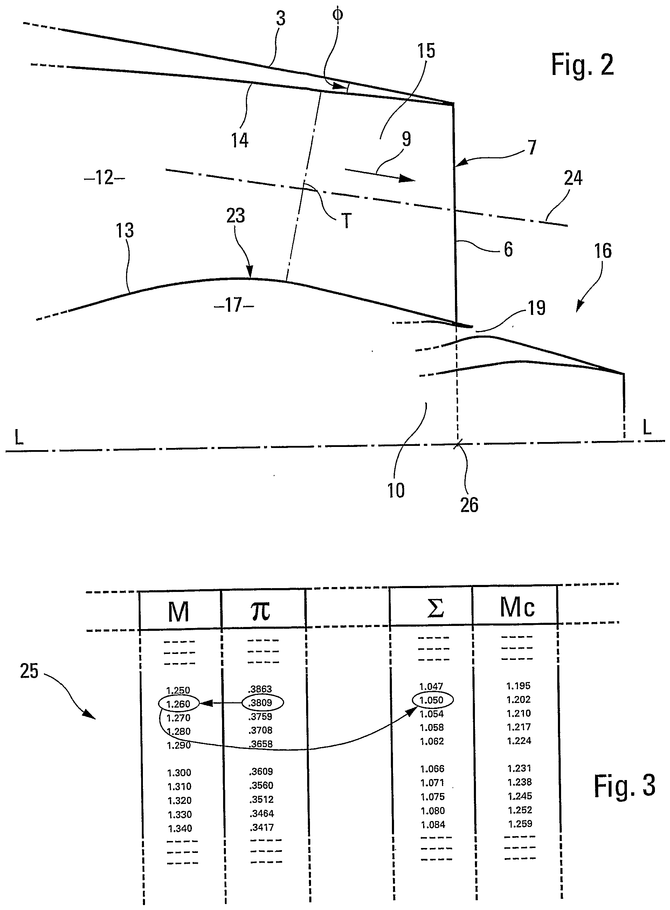

Le capot externe de soufflante 14 converge, vers l'arrière du turbomoteur 1, en direction dudit capot externe de la nacelle 3, pour former avec celui-ci le bord 7 dudit orifice 6, qui constitue donc l'orifice de sortie du flux froid. L'angle Φ formé entre lesdits capots convergents 3 et 14 au voisinage du bord de fuite 7 a une valeur de quelques degrés, par exemple 5 degrés (voir la figure 2).

Les capots interne et externe de soufflante 1 3 et 14 forment entre eux une tuyère 15 pour ledit flux froid 9, tuyère dont le col T est disposé en avant dudit orifice de sortie 6 et est indiqué en trait mixte sur la figure 1. L'aire nominale Ac du col de tuyère annulaire T est fixée par le cycle thermodynamique du turbomoteur 1.

L'aire A de l'orifice annulaire de sortie 6 du flux froid est supérieure à l'aire nominale Ac du col de tuyère annulaire T, de sorte que le rapport A/Ac est supérieur à 1.

Ainsi, la tuyère 15 est du type convergente/divergente et son taux de convergence/divergence (A-Ac)/Ac est de l'ordre de quelque pour-cent, par exemple de 0,5% à 1%.

Par ailleurs, du côté arrière du turbomoteur 1, ledit capot interne de soufflante 13 forme une saillie 16 par rapport audit capot externe de soufflante 14, ladite saillie 16 étant extérieure audit orifice de sortie du flux froid 6.

On peut mettre à profit la chambre annulaire 17 délimitée entre le capot interne de soufflante 13 et le générateur central 10 pour réguler la température de ce dernier. A cet effet, de l'air frais, provenant de la soufflante 8 et symbolisé par les flèches 18, est prélevé à l'avant de ladite chambre 17 et rejeté à l'arrière de celle-ci à travers au moins une ouverture de ventilation 19 pratiquée dans le capot interne de soufflante 13.

Lorsque l'aéronef (non représenté) qui porte le turbomoteur 1 se déplace, un écoulement aérodynamique externe 20 s'écoule autour de la nacelle 2, alors que le flux froid 9 et le flux chaud 11 sont respectivement éjectés par l'orifice 6 et par le générateur central 10 : ainsi, le flux froid 9 entoure le flux chaud 11 et est lui-même entouré par l'écoulement aérodynamique 20. Il se forme donc une surface de glissement 21 entre le flux froid 9 et le flux chaud 11, ainsi qu'une surface de glissement 22 entre ledit écoulement aérodynamique externe 20 et ledit flux froid 9. De plus, l'air de ventilation 18, sortant par l'ouverture 19, se mêle tout d'abord au flux froid 9, puis au flux chaud 11, et s'incorpore à la surface de glissement 21 entre ces derniers.

Avec la tuyère 15, montrée par les figures 1 et 2 et conforme à la présente invention, il n'apparaît, dans le flux froid 9, aucune alternance de zones de survitesses et de zones de vitesses subsoniques séparées par des chocs droits, génératrice de bruits et de perte de performances pour le turbomoteur 1, comme cela est expliqué ci-après.

Tout d'abord, le capot interne de soufflante 13 présentant la forme au moins approximative d'un tonneau, il est avantageux de positionner le col de tuyère T au voisinage du maître-couple 23 dudit capot 13, mais en arrière dudit maître-couple, pour bénéficier d'un léger effet de courbure permettant d'orienter ledit col de tuyère T de façon que ledit flux froid 9 s'aligne sur le cône moyen 24 de ladite tuyère 15.

Par ailleurs, par le calcul, on détermine les valeurs du taux de détente de la tuyère 15 au début et à la fin de la phase de croisière d'une mission de vol que doit principalement effectuer l'aéronef portant le turbomoteur 1. Puis, on détermine la moyenne de ces deux valeurs pour obtenir une valeur de référence VR de taux de détente qui est représentative du rapport Pt/P entre la valeur Pt de la pression totale du flux froid 9 et la valeur P de la pression statique (ambiante) à la sortie de l'orifice annulaire 6.

Comme représenté partiellement sur la figure 3, les "tables 25 de détente ou compression isentropiques - tables de chocs" à la disposition des aérodynamiciens regroupent les valeurs d'une pluralité de grandeurs aérodynamiques qui se correspondent. Sur la figure 3, la partie de table 25 représentée montre le nombre de Mach M, le nombre de Mach critique Mc, la grandeur Π représentant le rapport de la pression statique à la pression totale et la grandeur Σ représentative du rapport de l'aire de la section d'un tube de courant isentropique à l'aire de la section où le nombre de Mach est égal à 1.

Ainsi, pour la valeur VR du taux de détente déterminée ci-dessus (et qui correspond à la grandeur 1/Π), on peut déterminer, par consultation de la table 25, d'une part le nombre de Mach détendu M, puis la valeur du rapport Ath/Ac (qui correspond à la grandeur Σ) entre l'aire théorique Ath de l'orifice de sortie 6 et l'aire Ac du col de tuyère T.

Par exemple, si la valeur de référence VR est égale à 2,625 -c'est-à-dire si Π est égale à 0,3809- la table 25 montre que le nombre de Mach détendu M est égal à 1,260 et que, pour cette dernière valeur de M, la grandeur Σ est égale à 1,050. Par suite, dans cet exemple particulier, l'aire théorique Ath de l'orifice de sortie 6 du flux froid devrait être égale à 1,050xAc, c'est-à-dire que le taux de convergence-divergence de la tuyère de flux froid 15 serait égal à 5%.

On a ainsi déterminé la valeur théorique Ath que doit présenter l'aire A de l'orifice de sortie de flux froid 6 pour que ladite tuyère 15 soit adaptée au moins sensiblement à la phase de croisière de la mission que doit effectuer l'avion portant le turbomoteur 1.

En conséquence, ledit orifice de sortie 6 est disposé, le long dudit axe L-L, à l'emplacement 26 auquel, compte tenu de la forme du capot interne de soufflante 13, son aire A prend la valeur théorique Ath.

Bien entendu, l'ouverture 19 doit être placée de façon à se trouver en arrière dudit orifice de sortie 6.

## Revendications

1. Procédé pour améliorer les performances d'un turbomoteur à double flux monté sur un aéronef devant accomplir une mission de vol déterminée comprenant une phase de vol de croisière, ledit turbomoteur comportant, autour de son axe longitudinal (L-L) :
- une nacelle (2) pourvue d'un capot externe de nacelle (3) et enfermant une soufflante (8) engendrant le flux froid (9) et un générateur central (10) engendrant le flux chaud (11) ;
- un canal annulaire de flux froid (12) ménagé autour dudit générateur central de flux chaud (10) ;
- un capot externe de soufflante (14) délimitant ledit canal annulaire de flux froid (12) du côté dudit capot externe de nacelle (3) ;
- un orifice annulaire de sortie du flux froid (6), dont le bord (7), qui forme le bord de fuite de ladite nacelle (2), est déterminé par ledit capot externe de nacelle (3) et par ledit capot externe de soufflante (14) convergeant l'un vers l'autre jusqu'à se rejoindre ;
- un capot interne de soufflante (13) délimitant ledit canal annulaire de flux froid (12) du côté dudit générateur central de flux chaud (10), traversant ledit orifice du flux froid (6) et formant une saillie (16) vers l'arrière dudit turbomoteur hors dudit orifice de sortie du flux froid (6) ; et
- un col de tuyère de flux froid (T) qui est ménagé, en avant dudit orifice de sortie du flux froid (6), entre ledit capot interne de soufflante (13) et ledit capot externe de soufflante (14) et dont la section annulaire présente une aire nominale (Ac) fixée par le cycle thermodynamique dudit turbomoteur et inférieure à l'aire (A) dudit orifice de sortie du flux froid (6), de sorte qu'une tuyère convergente/divergente (15) est formée à la partie arrière dudit canal de flux froid (12),
**caractérisé en ce que** :
- on détermine les valeurs extrêmes du taux de détente dudit flux froid correspondant respectivement au début et à la fin de ladite phase de croisière ;
- on choisit, entre lesdites valeurs extrêmes, une valeur de référence (VR) pour ledit taux de détente ;
- pour cette valeur de référence (VR) du taux de détente, on détermine la valeur théorique (Ath) de l'aire dudit orifice de sortie du flux froid (6) à partir d'une valeur théorique auxiliaire représentative du rapport entre ladite aire théorique dudit orifice de sortie du flux froid et ladite aire nominale de la section dudit col de tuyère ; et
- on dispose ledit orifice de sortie du flux froid (6) le long dudit axe longitudinal (L-L) de façon que son aire corresponde à ladite valeur théorique (Ath).

2. Procédé selon la revendication 1,
**caractérisé en ce que** lesdites valeurs extrêmes du taux de détente dudit flux froid sont déterminées par le calcul.

3. Procédé selon l'une quelconque des revendications 1 ou 2,
**caractérisé en ce que** ladite valeur de référence (VR) du taux de détente est au moins approximativement égale à la valeur moyenne entre lesdites valeurs extrêmes du taux de détente dudit flux froid (9) correspondant respectivement au début et à la fin de ladite phase de croisière.

4. Procédé selon l'une quelconque des revendications 1 à 3,
**caractérisé en ce que** ladite valeur théorique auxiliaire est prélevée sur les « tables de détente ou compression isentropiques ».

5. Procédé selon l'une quelconque des revendications 1 à 4, appliqué à un turbomoteur dans lequel ledit capot interne de soufflante (13) présente la forme au moins approximative d'un tonneau,
caractérisé en en ce qu'on dispose ledit col de tuyère de flux froid (T) en arrière du maître-couple (23) dudit capot interne de soufflante (13).

6. Procédé selon la revendication 5,
**caractérisé en ce qu'**on oriente ledit col de tuyère de flux froid (T) de façon que ledit flux froid (9) soit aligné sur le cône moyen (24) de ladite tuyère (15).

7. Procédé selon l'une quelconque des revendications 1 à 6,
**caractérisé en ce que**, au moins au voisinage dudit orifice annulaire de sortie du flux froid (6), on donne à l'angle de convergence entre ledit capot externe de nacelle (3) et ledit capot externe de soufflante (14) une valeur égale à quelques degrés.

## Patentansprüche

1. Verfahren zur Verbesserung der Leistungen eines zweiflutigen Turbomotors, der an einem Flugzeug angebracht ist, das eine bestimmte Flugmission ausführen muss, die eine Reiseflugphase umfasst, wobei der Turbomotor um seine Längsachse (L-L) umfasst:
- eine Gondel (2), die mit einer äußeren Abdeckung (3) der Gondel versehen ist und ein Gebläse (8), das den kalten Strom (9) erzeugt, und einen zentralen Generator (10) umschließt, der den heißen Strom (11) erzeugt;
- einen ringförmigen Kanal für den kalten Strom (12), der um den zentralen Generator des heißen Stroms (10) vorgesehen ist;
- eine äußere Abdeckung für das Gebläse (14), die den ringförmigen Kanal des kalten Stroms (12) auf der Seite der äußeren Abdeckung der Gondel (3) begrenzt;
- eine ringförmige Auslassöffnung des kalten Stroms (6), deren Rand (7), der die Abströmkante von der Gondel (2) bildet, durch die äußere Abdeckung der Gondel (3) und durch die äußere Abdeckung des Gebläses (14) bestimmt ist, die zueinander konvergieren, bis sie aufeinander treffen;
- eine interne Abdeckung des Gebläses (13), die den ringförmigen Kanal des kalten Stroms (12) auf der Seite des zentralen Generators des warmen Stroms (10) begrenzt, durch die Öffnung des kalten Stroms (6) hindurchgeht und einen Vorsprung (16) hinten an dem Turbomotor außerhalb der Ausfassöffnung des kalten Stroms (6) bildet; und
- einen Düsenhals des kalten Stroms (T), der vor der Auslassöffnung des kalten Stroms (6) zwischen der inneren Abdeckung des Gebläses (13) und der äußeren Abdeckung des Gebläses (14) vorgesehen ist und dessen ringförmiger Abschnitt eine nominelle Fläche (Ac) aufweist, die durch den thermodynamischen Zyklus des Turbomotors festgelegt ist, und kleiner als die Fläche (A) der Auslassöffnung des kalten Stroms (6) ist, so dass eine konvergente / divergente Düse (15) an dem hinteren Abschnitt des Kanals des kalten Stroms (12) ausgebildet ist,
**dadurch gekennzeichnet dass**:
- die Extremwerte des Expansionsverhältnisses des kalten Stroms bestimmt werden , die dem Anfang bzw. dem Ende der Reiseflugphase entsprechen;
- unter den Extremwerten ein Referenzwert (VR) für das Expansionsverhältnis ausgewählt wird;
- für diesen Referenzwert (VR) des Expansionsverhältnisses der theoretische Wert (Ath) der Fläche der Auslassöffnung des kalten Stroms (6) ausgehend von einem repräsentativen theoretischen Hilfswert des Verhältnisses zwischen der theoretischen Fläche der Auslassöffnung des kalten Flusses und der nominellen Fläche des Querschnitts des Düsenhalses bestimmt wird; und
- die Auslassöffnung des kalten Stroms (6) entlang der Längsachse (L-L) so angebracht wird, dass seine Fläche dem theoretischen Wert (Ath) entspricht.

2. Verfahren nach Anspruch 1,
**dadurch gekennzeichnet, dass** die Extremwerte des Expansionsverhältnisses des kalten Stroms durch Berechnung bestimmt werden.

3. Verfahren nach einem der Ansprüche 1 oder 2,
**dadurch gekennzeichnet, dass** der Referenzwert (VR) des Expansionsverhältnisses mindestens ungefähr gleich dem Mittelwert unter den Extremwerten des Expansionsverhältnisses des kalten Stroms (9) ist, die dem Anfang bzw. dem Ende der Reiseflugphase entsprechen.

4. Verfahren nach einem der Ansprüche 1 bis 3,
**dadurch gekennzeichnet, dass** der theoretische Hilfswert aus den "Tabellen der isentropen Expansion oder Kompression" entnommen ist.

5. Verfahren nach einem der Ansprüche 1 bis 4,
das auf einen Turbomotor angewendet wird, wobei die innere Abdeckung des Gebläses (13) zumindest näherungsweise die Form eines Fasses aufweist,
**dadurch gekennzeichnet, dass** der Düsenhals des kalten Stroms (T) hinter dem Meister-Paar (23) der inneren Abdeckung des Gebläses (13) vorgesehen ist.

6. Verfahren nach Anspruch 5,
**dadurch gekennzeichnet, dass** der Düsenhals des kalten Stroms (T) so orientiert ist, dass der kalte Strom (9) auf dem Mittelkegel (24) der Düse (15) ausgerichtet ist.

7. Verfahren nach einem der Ansprüche 1 bis 6,
**dadurch gekennzeichnet, dass** zumindest in der Nähe von der ringförmigen Auslassöffnung des kalten Stroms (6) der Konvergenzwinkel zwischen der äußeren Abdeckung der Gondel (3) und der äußeren Abdeckung des Gebläses (14) einen Wert hat, der gleich ein paar Grad ist.

## Claims

1. A method for improving the performance of a bypass turbojet engine mounted on an aircraft that is to accomplish a determined flight mission comprising a phase of cruising flight, said turbojet engine comprising, around its longitudinal axis (L-L):
- a nacelle (2) provided with a nacelle outer cowl (3) and containing a fan (8) generating the cold flow (9) and a central generator (10) generating the hot flow (11);
- an annular cold flow duct (12) formed around said central hot flow generator (10);
- a fan outer cowl (14) delimiting said annular cold flow duct (12) on the nacelle outer cowl (3) side;
- an annular cold flow outlet orifice (6) of which the edge (7), which forms the trailing edge of said nacelle (2), is determined by said nacelle outer cowl (3) and by said fan outer cowl (14) converging toward one another until they meet;
- a fan inner cowl (13) delimiting said annular cold flow duct (12) on said central hot flow generator (10) side, passing through said cold flow orifice (6) and forming a projection (16) out of said cold flow outlet orifice (6) toward the rear of said turbojet engine; and
- a cold flow nozzle throat (T) which is formed, forward of said cold flow outlet orifice (6), between said fan inner cowl (13) and said fan outer cowl (14) and of which the annular cross section has a nominal area (Ac) fixed by the thermodynamic cycle of said turbojet engine and smaller than the area (A) of said cold flow outlet orifice (6), so that a convergent/divergent nozzle (15) is formed at the rear part of said cold flow duct (12),
**characterized in that**:
- the extreme values for the expansion ratio of said cold flow corresponding respectively to the start and to the end of said cruising phase are determined;
- from said extreme values, a reference value (VR) for said expansion ratio is chosen;
- for this reference value (VR) of the expansion ratio, the theoretical value (Ath) of the area of said cold flow outlet orifice (6) is determined from an auxiliary theoretical value representative of the ratio between said theoretical area of said cold flow outlet orifice and said nominal cross-sectional area of said nozzle throat; and
- said cold flow outlet orifice (6) is positioned along said longitudinal axis (L-L) in such a way that its area corresponds to said theoretical value (Ath).

2. The method as claimed in claim 1,
**characterized in that** said extreme values of the expansion ratio of said cold flow are determined by calculation.

3. The method as claimed in either one of claims 1 and 2,
**characterized in that** said reference value (VR) of the expansion ratio is at least approximately equal to the mean of said extreme values of the expansion ratio of said cold flow (9) corresponding respectively to the start and to the end of said cruising phase.

4. The method as claimed in claim 4,
**characterized in that** said auxiliary theoretical value is taken front "expanded Mach number charts".

5. The method in either one of claims 1 to 4, implemented to a turbojet engine, wherein said fan inner cowl (13) is at least approximately barrel-shaped,
**characterized in that** said cold flow nozzle throat (T) is positioned to the rear of the maximum cross section (23) of said fan inner cowl (13).

6. The turbojet engine as claimed in claim 5,
**characterized in that** said cold flow nozzle throat (T) is oriented in such a way that said cold flow (9) is aligned with the mean cone (24) of said nozzle (15).

7. The turbojet engine as claimed in one of claims 1 to 6,
**characterized in that**, at least in the vicinity of said annular cold flow outlet orifice (6), the angle of convergence between said nacelle outer cowl (3) and said fan outer cowl (14) is equal to a few degrees.
